# EUROPEAN PATENT APPLICATION

(11) **EP 4 501 736 A1**
(43) Date of publication of application: **05.02.2025**
(21) Application number: 22937801.3
(22) Date of filing: 20.04.2022
(51) Int. Cl.: B60W 50/023, G05B 9/03, H04L 1/22

(54) **CONTROL METHOD AND APPARATUS, AND MEANS OF TRANSPORTATION**

(71) Applicant: Shenzhen Yinwang Intelligent Technologies Co., Ltd., Shenzhen, Guangdong 518129 (CN)
(72) Inventor: WANG, Jianwei, Shenzhen, Guangdong 518129 (CN); YAN, Li, Shenzhen, Guangdong 518129 (CN); LAI, Longzhen, Shenzhen, Guangdong 518129 (CN)
(74) Representative: Pfenning, Meinig & Partner mbB
(86) International application number: PCT/CN2022/087879
(87) International publication number: WO 2023/201563

(57) **Abstract**

Embodiments of this application provide a control method and apparatus, and a means of transportation. The method includes: A first controller obtains a first sensing result based on data collected by a sensor in a first sensor group; a second controller obtains a second sensing result based on data collected by a sensor in a second sensor group; the first controller receives the second sensing result sent by the second controller; and the first controller sends a first control instruction to an executor based on the first sensing result and the second sensing result. Embodiments of this application may be applied to an intelligent vehicle or an electric vehicle, to help improve utilization of computing resources and reduce costs of a controller.

## Description

### TECHNICAL FIELD

Embodiments of this application relate to the field of intelligent driving, and more specifically, to a control method and apparatus, and a means of transportation.

### BACKGROUND

From a perspective of international standards and functional safety requirements for autonomous driving, an autonomous driving system is responsible for L3 and above-L3 autonomous driving scenarios. A design requirement of the autonomous driving system is "fail operational" (fail operational). That is, after a fault occurs, the autonomous driving system continues to run an autonomous driving function and takes corresponding measures to enable a vehicle to safely exit autonomous driving.

For this application scenario, currently, mainstream vendors in the industry use two autonomous driving controllers for "1:1" backup redundancy. In other words, two same autonomous driving domain controllers are connected in parallel in the entire system. One of the autonomous driving controllers is used as a master controller to run a complete autonomous driving service and output a vehicle control instruction to control running of the vehicle. The other autonomous driving controller is used as a backup controller. When the master controller is faulty, the backup controller can replace the master controller to continue to process services and control vehicle behaviors. Therefore, both the master controller and the backup controller need to have high computing performance to meet system requirements. However, when the master controller is not faulty, the backup controller is in an idle state, causing a waste of costs and computing resources.

### SUMMARY

Embodiments of this application provide a control method and apparatus, and a means of transportation, to help improve utilization of computing resources and reduce costs of a controller.

In embodiments of this application, the means of transportation may include one or more different types of transportation tools or movable objects that operate or move on land (for example, a highway, a road, or a railway), a water surface (for example, a waterway, a river, or an ocean), or in space. For example, the means of transportation may include a car, a bicycle, a motorcycle, a train, a subway, an airplane, a ship, an aircraft, a robot, and/or another type of transportation tool or movable object, or the like.

According to a first aspect, a control method is provided. The method includes: A first controller obtains a first sensing result based on data collected by a sensor in a first sensor group; a second controller obtains a second sensing result based on data collected by a sensor in a second sensor group; the first controller receives the second sensing result sent by the second controller; and the first controller sends a first control instruction to an executor based on the first sensing result and the second sensing result.

In this embodiment of this application, the first controller and the second controller may separately perform sensing on the data collected by the sensors in the first sensor group and the second sensor group, to obtain the first sensing result and the second sensing result. The first controller may generate and send the first control instruction to the executor based on the first sensing result obtained by the first controller through computing and the second sensing result sent by the second controller to the first controller. In this way, the first controller may use a computing capability of the second controller, to help improve utilization of computing resources. In addition, the first controller and the second controller only need to process data collected by sensors in sensor groups corresponding to the first controller and the second controller, and the two controllers do not need to have high computing performance. This helps reduce costs of the controller.

In some possible implementations, the first controller may be a master controller, and the second controller may be a backup controller.

With reference to the first aspect, in some implementations of the first aspect, the method further includes: The second controller receives the first sensing result sent by the first controller; and the second controller generates a second control instruction based on the first sensing result and the second sensing result.

In this embodiment of this application, the second controller may generate the second control instruction by using the second sensing result obtained by the second controller through computing and the sensing result sent by the first controller to the second controller. In this way, the second controller may also use the computing capability of the first controller, to help further improve utilization of computing resources.

With reference to the first aspect, in some implementations of the first aspect, the method further includes: The second controller sends the second control instruction to the executor.

In this embodiment of this application, both the first controller and the second controller may send the control instructions generated by the first controller and the second controller to the executor. In this way, the executor may perform a corresponding control operation based on the first control instruction sent by the first controller and the second control instruction sent by the second controller.

In some possible implementations, the first control instruction includes first identification information, the second control instruction includes second identification information, and the first identification information is different from the second identification information. After receiving the first control instruction and the second control instruction, the executor may perform a corresponding control operation based on the first identification information and the second identification information.

For example, the first identifier information may be a first controller area network identification (controller area network identification, CAN ID), and the second identifier information may be a second CAN ID. The executor may store a correspondence between identification information (for example, a CAN ID) and a priority of a control instruction. For example, a priority of a control instruction corresponding to the first CAN ID is higher than a priority of a control instruction corresponding to the second CAN ID. In this way, when receiving the first control instruction and the second control instruction, the executor may execute the first control instruction with a higher priority, and discard the second control instruction or skip executing the second control instruction.

In some possible implementations, the first control instruction includes first priority information, and the second control instruction includes second priority information. In this way, the executor does not need to store the correspondence between the identification information and the priority of the control instruction. The executor may directly execute a control instruction with a higher priority. For example, a first priority is higher than a second priority. In this case, when receiving the first control instruction and the second control instruction, the executor may execute the first control instruction with a higher priority, and discard the second control instruction or skip executing the second control instruction.

In some possible implementations, the first control instruction may include identification information of the first controller, and the second control instruction may include identification information of the second controller. The executor may store a correspondence between identification information of a controller and a priority of a control instruction sent by the controller. For example, a priority of a control instruction sent by the first controller is higher than a priority of a control instruction sent by the second controller. In this way, when receiving the first control instruction and the second control instruction, the executor may execute the first control instruction with a higher priority, and discard the second control instruction with a lower priority or skip executing the second control instruction.

With reference to the first aspect, in some implementations of the first aspect, the method further includes: When the first controller is faulty, the first controller stops sending the first control instruction to the executor.

In this embodiment of this application, when the first controller is faulty, the first controller may stop sending the first control instruction to the executor. In this way, when the executor does not receive the first control instruction and receives the second control instruction, the executor may directly execute the second control instruction. This avoids a process of communication negotiation between the first controller and the second controller during switching. Control instructions are quickly switched by prohibiting the first controller from sending a control instruction to the executor, so that a switching rate of the first controller and the second controller is increased. In addition, because the second controller can quickly take over a control right of a means of transportation, safety performance of the means of transportation is improved.

With reference to the first aspect, in some implementations of the first aspect, the method further includes: When the first controller is faulty, the first controller stops sending the first control instruction; and the second controller sends the second control instruction to the executor when it is determined that the first controller is faulty and the second controller is not faulty.

In this embodiment of this application, when it is determined that the first controller is faulty and the second controller is not faulty, the second controller may send the second control instruction to the executor, so that when the first controller is faulty, a controller right of the means of transportation is switched from the first controller to the second controller.

In some possible implementations, that the second controller determines that the first controller is faulty includes: The second controller receives indication information sent by the first controller, where the indication information indicates that the first controller is faulty.

In some possible implementations, the first controller may periodically send information (for example, a sensing result or information indicating whether the first controller is faulty) to the second controller. The second controller may receive, in a running period of a timer, information sent by the first controller. If the information sent by the first controller is not received when the timer expires, the second controller may determine that the first controller is faulty.

With reference to the first aspect, in some implementations of the first aspect, the method is applied to a means of transportation, and before the sending a first control instruction to an executor, the method further includes: determining that the means of transportation is in an autonomous driving state; and the method further includes: prompting a user to take over the means of transportation.

In this embodiment of this application, when the first controller is faulty, the user may be prompted to take over the means of transportation. In this way, the user can quickly take over the means of transportation after seeing a prompt, so that driving safety of the user is ensured.

With reference to the first aspect, in some implementations of the first aspect, the first controller is faulty at a first moment, and the method further includes: The first controller sends a third sensing result to the second controller, where the third sensing result includes a result obtained by performing sensing by the first controller in a first time period on the data collected by the sensor in the first sensor group, and the first time period is before the first moment; and the second controller controls, based on the third sensing result and the second sensing result, the means of transportation to stop traveling.

In this embodiment of this application, when the first controller is faulty, the second controller may control, based on the third sensing result and the second sensing result that are obtained through computing before the first controller is faulty, the means of transportation to stop traveling, so that safety of the means of transportation is improved.

With reference to the first aspect, in some implementations of the first aspect, at least some sensors in the first sensor group are different from sensors in the second sensor group.

In this embodiment of this application, the at least some sensors in the first sensor group are different from the sensors in the second sensor group. In this way, the first controller and the second controller may separately perform sensing on data collected by different sensors, to help improve utilization of computing resources in the means of transportation.

In some possible implementations, that at least some sensors in the first sensor group are different from sensors in the second sensor group may be understood as that the second sensor group does not include the at least some sensors in the first sensor group, or may be understood as that sensors in the first sensor group are different from the sensors in the second sensor group, that is, the first sensor group and the second sensor group do not have a same sensor, or may be understood as that some sensors in the first sensor group are the same as some sensors in the second sensor group, and the other sensors in the first sensor group are different from the other sensors in the second sensor group, that is, the first sensor group does not include some sensors in the second sensor group, and the second sensor group does not include some sensors in the first sensor group.

With reference to the first aspect, in some implementations of the first aspect, the first sensor group and the second sensor group include a positioning sensor and a millimeter-wave radar.

In this embodiment of this application, the first sensor group and the second sensor group may include a positioning sensor and a millimeter-wave radar. In this way, when the positioning sensor and the millimeter-wave radar in the first sensor group are not faulty but the first controller is faulty, the second controller may further perform sensing by using data collected by the positioning sensor and the millimeter-wave radar in the first sensor group, to help improve safety performance of the means of transportation.

With reference to the first aspect, in some implementations of the first aspect, the second sensor group includes a side-view camera.

In this embodiment of this application, an example in which the first controller and the second controller are located in a vehicle is used. The second controller may ensure safe parking of the vehicle by using data collected by the side-view camera in the second sensor group.

According to a second aspect, a control apparatus is provided. The control apparatus includes: a first control unit, configured to obtain a first sensing result based on data collected by a sensor in a first sensor group; and a second control unit, configured to obtain a second sensing result based on data collected by a sensor in a second sensor group. The second control unit is further configured to send the second sensing result to the first control unit. The first control unit is configured to send a first control instruction to an executor based on the first sensing result and the second sensing result.

With reference to the second aspect, in some implementations of the second aspect, the first control unit is further configured to send the first sensing result to the second control unit. The second control unit is further configured to generate a second control instruction based on the first sensing result and the second sensing result.

With reference to the second aspect, in some implementations of the second aspect, the second control unit is further configured to send the second control instruction to the executor.

With reference to the second aspect, in some implementations of the second aspect, the first control unit is further configured to: when the first control unit is faulty, stop sending the first control instruction to the executor.

With reference to the second aspect, in some implementations of the second aspect, the first control unit is further configured to: when the first control unit is faulty, stop sending the first control instruction; and the second control unit is configured to send the second control instruction to the executor when it is determined that the first control unit is faulty and the second control unit is not faulty.

With reference to the second aspect, in some implementations of the second aspect, the first control unit is further configured to: before sending the first control instruction to the executor, determine that a means of transportation is in an autonomous driving state. The first control unit is further configured to: when the first control unit is faulty, control a prompt apparatus to prompt a user to take over the means of transportation.

With reference to the second aspect, in some implementations of the second aspect, the first control unit is faulty at a first moment. The first control unit is further configured to send a third sensing result to the second control unit, where the third sensing result includes a result obtained by performing sensing by the first control unit in a first time period on the data collected by the sensor in the first sensor group, and the first time period is before the first moment. The second control unit is further configured to control, based on the third sensing result and the second sensing result, the means of transportation to stop traveling.

With reference to the second aspect, in some implementations of the second aspect, at least some sensors in the first sensor group are different from sensors in the second sensor group.

With reference to the second aspect, in some implementations of the second aspect, the first sensor group and the second sensor group include a positioning sensor and a millimeter-wave radar.

With reference to the second aspect, in some implementations of the second aspect, the second sensor group includes a side-view camera.

According to a third aspect, an apparatus is provided. The apparatus includes: a memory, configured to store computer instructions; and a processor, configured to execute the computer instructions stored in the memory, so that the apparatus performs the method in the first aspect.

According to a fourth aspect, a means of transportation is provided. The means of transportation includes the apparatus according to any one of the second aspect or the third aspect.

With reference to the fourth aspect, in some implementations of the fourth aspect, the means of transportation is a vehicle.

According to a fifth aspect, a computer program product is provided. The computer program product includes computer program code, and when the computer program code is run on a computer, the computer is enabled to perform the method according to the first aspect.

All or some of the computer program code may be stored in a first storage medium. The first storage medium may be encapsulated together with a processor, or may be encapsulated separately from a processor. This is not specifically limited in embodiments of this application.

According to a sixth aspect, a computer-readable medium is provided. The computer-readable medium stores program code, and when the computer program code is run on a computer, the computer is enabled to perform the method according to the first aspect.

According to a seventh aspect, an embodiment of this application provides a chip system. The chip system includes a processor, configured to invoke a computer program or computer instructions stored in a memory, so that the processor performs the method according to the first aspect.

With reference to the seventh aspect, in a possible implementation, the processor is coupled to the memory through an interface.

With reference to the seventh aspect, in a possible implementation, the chip system further includes the memory, and the memory stores a computer program or computer instructions.

### BRIEF DESCRIPTION OF DRAWINGS

FIG. 1 is a schematic functional block diagram of a vehicle according to an embodiment of this application;
FIG. 2 is a schematic diagram of a system architecture according to an embodiment of this application;
FIG. 3 is another schematic diagram of a system architecture according to an embodiment of this application;
FIG. 4 is a schematic flowchart of a control method according to an embodiment of this application; and
FIG. 5 is a schematic block diagram of a control apparatus according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

In embodiments of this application, prefix words such as "first" and "second" are used only to distinguish between different described objects, and do not limit a location, a sequence, a priority, a quantity, content, or the like of the described objects. In embodiments of this application, use of a prefix word like an ordinal number for distinguishing between described objects does not constitute a limitation on the described objects. For description of the described objects, refer to the description of the context in the claims or the embodiments. The use of such a prefix word should not constitute an unnecessary limitation. In addition, in the description of embodiments, unless otherwise specified, "a plurality of" means two or more.

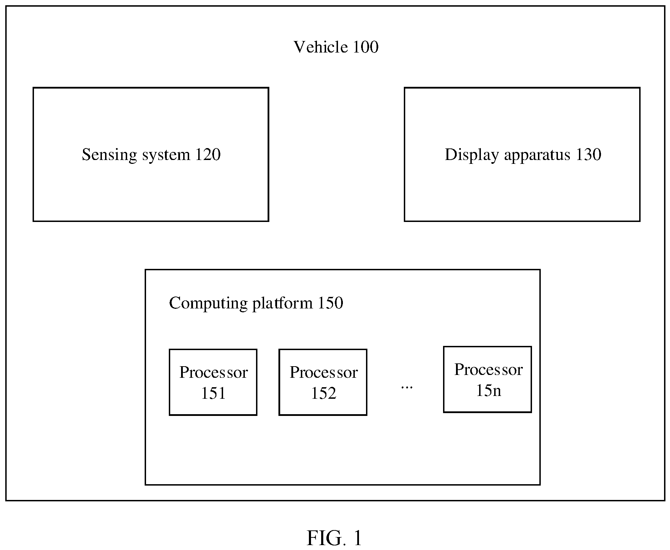

FIG. 1 is a schematic functional block diagram of a vehicle 100 according to an embodiment of this application. The vehicle 100 may include a sensing system 120, a display apparatus 130, and a computing platform 150. The sensing system 120 may include several sensors that sense information about an environment around the vehicle 100. For example, the sensing system 120 may include a positioning system. The positioning system may be a global positioning system (global positioning system, GPS), or may be a BeiDou system or another positioning system, or an inertial measurement unit (inertial measurement unit, IMU). For another example, the sensing system 120 may further include one or more of a lidar, a millimeter-wave radar, an ultrasonic radar, and a camera apparatus.

Some or all functions of the vehicle 100 may be controlled by the computing platform 150. The computing platform 150 may include processors 151 to 15n (where n is a positive integer). The processor is a circuit having a signal processing capability. In an implementation, the processor may be a circuit having an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads an instruction to implement functions of some or all of the foregoing units. In addition, the processor may be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU). In addition, the computing platform 150 may further include a memory. The memory is configured to store instructions, and some or all of the processors 151 to 15n may invoke the instructions in the memory to execute the instructions, to implement a corresponding function.

The vehicle 100 may include an advanced driving assistant system (advanced driving assistant system, ADAS). The ADAS obtains information around the vehicle by using a plurality of sensors (including but not limited to a lidar, a millimeter-wave radar, a camera apparatus, an ultrasonic sensor, a global positioning system, and an inertia measurement unit) on the vehicle, and analyzes and processes the obtained information, to implement functions such as obstacle sensing, target recognition, vehicle positioning, path planning, and driver monitoring/prompt. In this way, driving safety, automation, and comfort of the vehicle are improved.

From a perspective of a logical function, the ADAS system generally includes three main functional modules: a sensing module, a decision module, and an execution module. The sensing module senses n environment around a vehicle body by using a sensor, and inputs corresponding real-time data to a decision layer processing center. The sensing module mainly includes a vehicle-mounted camera, an ultrasonic radar, a millimeter-wave radar, a lidar, or the like. The decision module uses a computing apparatus and an algorithm to make a corresponding decision based on information obtained by the sensing module. After receiving a decision signal from the decision module, the execution module takes a corresponding action, for example, driving, lane change, steering, braking, or warning.

At different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). The L0 level indicates no automation, the L1 level indicates driving support, the L2 level indicates partial automation, the L3 level indicates conditional automation, the L4 level indicates high automation, and the L5 level indicates full automation. Tasks of monitoring road conditions and making a response at the L1 to L3 levels are jointly completed by a driver and a system, and the driver needs to take over dynamic driving tasks. The L4 and L5 levels may enable the driver to be completely changed to a passenger. Currently, functions that can be implemented by the ADAS mainly include but are not limited to: adaptive cruise, automatic emergency braking, automatic parking, blind spot monitoring, traffic warning/braking at an intersection ahead, traffic warning/braking at an intersection behind, front vehicle collision warning, lane deviation warning, lane keeping assistance, rear vehicle anti-collision warning, traffic sign identification, traffic congestion assistance, highway assistance, and the like. It should be understood that the foregoing functions may have specific modes at the different autonomous driving levels (L0 to L5). A higher autonomous driving level indicates a more intelligent mode. For example, automatic parking may include an APA, an RPA, an AVP, and the like. For the APA, the driver does not need to control a steering wheel, but still needs to control a throttle and a brake on the vehicle. For the RPA, the driver may remotely park the vehicle outside the vehicle by using a terminal (for example, a mobile phone). For the AVP, the vehicle may complete parking without a driver. From a perspective of a corresponding autonomous driving level, the APA is approximately at the L1 level, the RPA is approximately at the L2 and L3 levels, and the AVP is approximately at the L4 level.

As mentioned above, from a perspective of international standards and functional safety requirements for autonomous driving, an autonomous driving system is responsible for L3 and above-L3 autonomous driving scenarios. A design requirement of the autonomous driving system is "fail operational" (fail operational). That is, after a fault occurs, the autonomous driving system continues to run an autonomous driving function and takes corresponding measures to enable a vehicle to safely exit autonomous driving.

For this application scenario, currently, mainstream vendors in the industry use two autonomous driving controllers for "1:1" backup redundancy. In other words, two same autonomous driving domain controllers are connected in parallel in the entire system. One of the autonomous driving controllers is used as a master controller to run a complete autonomous driving service and output a vehicle control instruction to control running of the vehicle. The other autonomous driving controller is used as a backup controller. When the master controller is faulty, the backup controller can replace the master controller to continue to process services and control vehicle behaviors. Therefore, both the master controller and the backup controller need to have high computing performance to meet system requirements. However, when the master controller is not faulty, the backup controller is in an idle state, causing a waste of costs and computing resources.

Embodiments of this application provide a control method and apparatus, and a means of transportation. Two controllers cooperate with each other in a load sharing manner. Each controller processes a different service, and sends a sensing result to a peer controller through a communication bus between the controllers, so that each controller can obtain sensing results of all sensors. This helps improve utilization of computing resources, and also helps reduce costs of the controller.

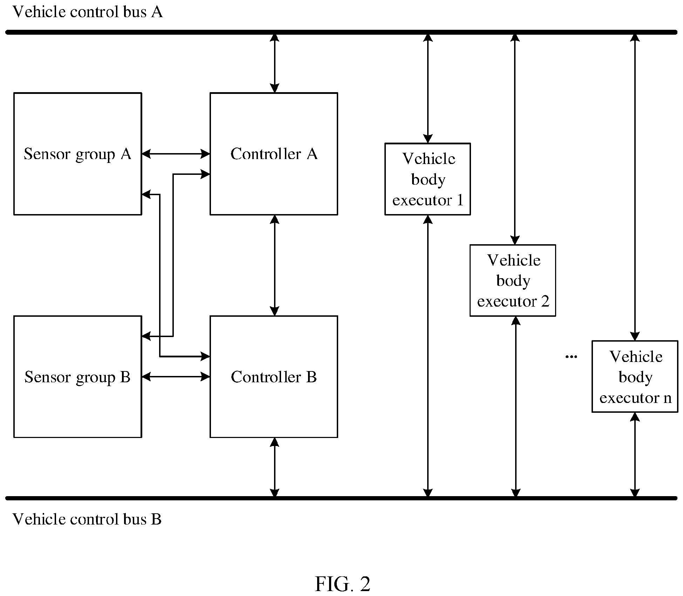

FIG. 2 is a schematic diagram of a system architecture according to an embodiment of this application. As shown in FIG. 2, the system architecture includes a sensor group A, a sensor group B, a controller A, a controller B, and vehicle body executors 1 to n. A sensor in the sensor group A may be connected to the controller A, and a sensor in the sensor group B may be connected to the controller B. The controller A may send a generated vehicle control instruction to a vehicle control bus A, and the controller B may send a generated vehicle control instruction to a vehicle control bus B. The system architecture shown in FIG. 2 may be applied to an autonomous driving scenario with high function security, high reliability, and high performance, and is a new architecture that is of a vehicle-mounted autonomous driving controller and that integrates interconnected and interactive software and hardware.

The sensor group A and the sensor group B include but are not limited to several camera apparatuses, lidars, millimeter-wave radars, ultrasonic radars, GPSs, IMUs, and the like. In addition, some sensors in the sensor group A are allowed to be connected to the controller B, and some sensors in the sensor group B are also allowed to be connected to the controller A.

In an embodiment, a sensor that outputs data through a controller area network (controller area network, CAN) bus or a controller area network with flexible data-rate (CAN with flexible data-rate, CANFD) bus may be connected to both the controller A and the controller B.

The controller A and the controller B have a capability of performing sensing computation on sensor data input externally, to identify information of an environment around a vehicle, and control a vehicle behavior by using a series of computing processes. In this embodiment of this application, the controller A and the controller B may be interconnected through a communication bus. For example, the communication bus may be an Ethernet bus, a CAN bus, or the like.

It should be understood that the controller A and the controller B shown in FIG. 2 may be located in the foregoing ADAS system.

It should be further understood that the system architecture shown in FIG. 2 is described by using an example in which two sensor groups and two controllers are included. A quantity of sensor groups and controllers is not specifically limited in embodiments of this application. For example, the system architecture may further include three (or more than three) sensor groups and three (or more than three) controllers.

It should be further understood that the quantity of sensor groups may be equal to the quantity of controllers, or the quantity of sensor groups may be unequal to the quantity of controllers. For example, the system architecture may include the sensor group A, the sensor group B, a sensor group C, the controller A, and the controller B. The sensor group A and the sensor group C may be connected to the controller A, and the sensor group B may be connected to the controller B. For another example, the system architecture may include the sensor group A, the sensor group B, the controller A, the controller B, and a controller C. The sensor group A may be connected to the controller A, and the sensor group B may be connected to both the controller B and the controller C.

In this embodiment of this application, the controller A and the controller B may jointly process an important service in autonomous driving services in a load balancing manner, for example, process a sensing result. The controller A performs computing on data collected by the sensor in the sensor group A connected to the controller A, to obtain a first sensing result. The first sensing result may include information about an environment (including but not limited to lane line information, obstacle information, a traffic sign, location information, and the like) around the vehicle. Similarly, the controller B may also perform computing on data collected by the sensor in the sensor group B connected to the controller B, to obtain a second sensing result. The second sensing result may include information about an environment around the vehicle. The controller A and controller B may exchange structured data on which sensing computation is performed, so that both controllers can obtain sensing results of each other. In this way, sensing computation is separately performed by the two controllers, and computing results can be shared between the two controllers.

In this way, the controller A may use a computing capability of the controller B, and the controller B may also use a computing capability of the controller A, to help improve utilization of computing resources. In addition, the controller A and the controller B only need to process data collected by sensors in sensor groups corresponding to the controller A and the controller B, and the two controllers do not need to have high computing performance. This helps reduce costs of the controller.

The vehicle body executors 1 to n may include vehicle body executors on the vehicle for controlling horizontal and vertical behaviors of the vehicle. For example, the vehicle body executors 1 to n may include a motor control unit (integrated power unit, IPU), an electronic control steering system (electrical power system, EPS), an electrical brake system (electrical brake system, EBS), and the like. These vehicle body executors are responsible for receiving a vehicle control instruction output by the controller A and/or the controller B, to implement control on the vehicle by the controller A or the controller B. As shown in FIG. 2, the vehicle body executors may be respectively connected to the controllers through two different vehicle control buses. The controller A is connected to the vehicle body executors 1 to n through the vehicle control bus A, and the controller B is connected to the vehicle body executors 1 to n through the vehicle control bus B. The controller A may send a vehicle control instruction to the vehicle control bus A through a CAN bus or a CANFD bus, and the controller B may send a vehicle control instruction to the vehicle control bus B through a CAN bus or a CANFD bus.

Each of the controller A and the controller B may control a behavior of the vehicle through a vehicle control bus.

For example, if the vehicle body executor supports controlling the vehicle by using two vehicle control instructions, when both the controller A and the controller B are normal, the controller A and the controller B respectively send the vehicle control instructions through the vehicle control bus A and the vehicle control bus B. If a priority of the vehicle control instruction on the vehicle control bus A is higher than that of the vehicle control instruction on the vehicle control bus B, the vehicle body executor obtains the vehicle control instruction from the vehicle control bus A. In this case, the controller A dominates the control on the vehicle.

When the controller A is faulty, the controller A stops sending a vehicle control instruction to the vehicle control bus A, and the vehicle body executor receives the vehicle control instruction on the vehicle control bus B instead. In this case, the control on the vehicle is switched from being dominated by the controller A to being dominated by the controller B. In addition, the controller A (or the controller B) may further control a prompt apparatus to prompt a user to take over the vehicle and/or control the vehicle to pull over. If the controller B is faulty, the controller B stops sending a vehicle control instruction through the vehicle control bus B, and the vehicle is still under control of the controller A. In addition, the controller A (or the controller B) may further control the prompt apparatus to prompt the user to take over the vehicle and/or control the vehicle to pull over.

In this embodiment of this application, when the controller A is faulty, the controller A may stop sending a vehicle control instruction to the vehicle body executor. In this way, when the vehicle body executor does not receive the vehicle control instruction sent by the controller A and receives the vehicle control instruction sent by the controller B, the vehicle body executor may directly execute the vehicle control instruction sent by the controller B. This avoids a process of communication negotiation during switching between the controller A and the controller B, to help increase a switching rate of the controller A and the controller B. In addition, because the controller B can quickly take over a control right of the vehicle, safety performance of the vehicle is improved.

For another example, if the vehicle body executor supports controlling the vehicle by using only one vehicle control instruction, the controller A and the controller B negotiate to allow only one vehicle control instruction to be sent. When both the controller A and the controller B are normal, the controller A may send a vehicle control instruction to the vehicle body executor through the vehicle control bus A. When the controller A is faulty and the controller B is normal, the controller A stops sending a vehicle control instruction to the vehicle body executor through the vehicle control bus A, and the controller B may send a vehicle control instruction to the vehicle body executor through the vehicle control bus B.

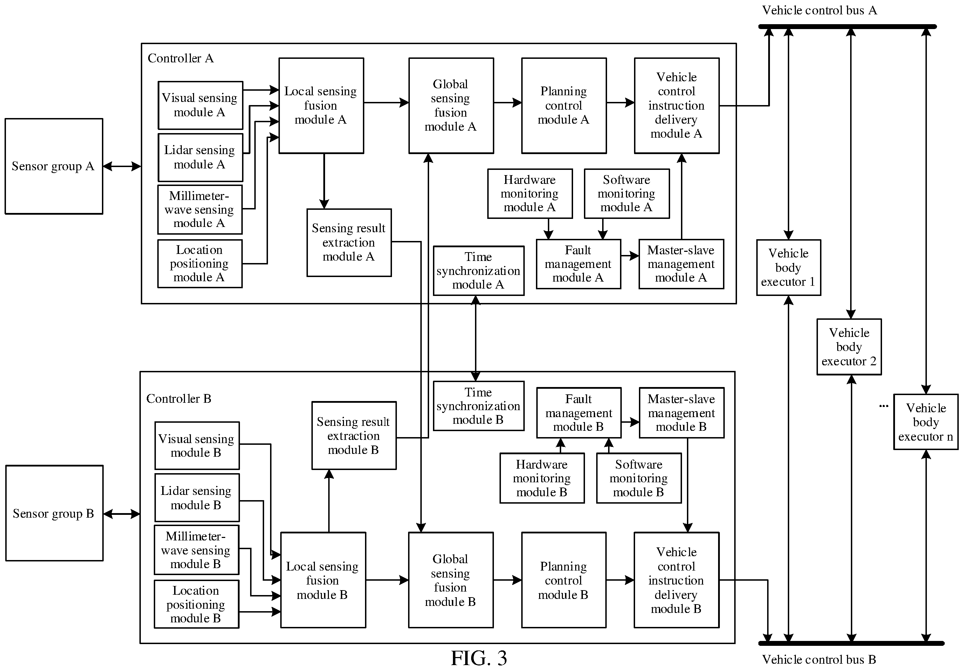

FIG. 3 is another schematic diagram of a system architecture according to an embodiment of this application. As shown in FIG. 3, the controller A may include a visual sensing module A, a lidar sensing module A, a millimeter-wave sensing module A, a location positioning module A, a local sensing fusion module A, a sensing result extraction module A, a global sensing fusion module A, a planning control module A, a vehicle control instruction delivery module A, a hardware monitoring module A, a software monitoring module A, a fault management module A, a master-slave management module A, and a time synchronization module A. The controller B may include a visual sensing module B, a lidar sensing module B, a millimeter-wave sensing module B, a location positioning module B, a local sensing fusion module B, a sensing result extraction module B, a global sensing fusion module B, a planning control module B, a vehicle control instruction delivery module B, a hardware monitoring module B, a software monitoring module B, a fault management module B, a master-slave management module B, and a time synchronization module B.

The controller A and the controller B perform time synchronization by using the time synchronization module A and the time synchronization module B, so that time on the controller A is synchronized with time on the controller B. Either controller A or controller B may serve as a master controller, and the other one may serve as a backup controller.

The visual sensing module A, the lidar sensing module A, the millimeter-wave sensing module A, and the location positioning module A on the controller A may separately process data collected by a camera apparatus in a sensor group A, data collected by a lidar, data collected by a millimeter-wave radar, and data collected by a GPS/IMU, to obtain a corresponding sensing result. In addition, the visual sensing module B, the lidar sensing module B, the millimeter-wave sensing module B, and the location positioning module B on the controller B may separately process data collected by a camera apparatus in a sensor group B, data collected by a lidar, data collected by a millimeter-wave radar, and data collected by a GPS/IMU, to obtain a corresponding sensing result. When the foregoing data is input into the controller, a timestamp is added to the data based on time information on the respective controller, so that the data can be sequenced.

It should be understood that the foregoing is described by using an example in which each of the controller A and the controller B has a visual sensing module, a lidar sensing module, a millimeter-wave sensing module, and a location positioning module. This embodiment of this application is not limited thereto. For example, when the controller A is responsible for an autonomous driving service of a vehicle, the sensor group A may include a front-view long-range camera, a front-view short-range camera, a surround-view camera (for example, a front-view camera, a rear-view camera, a left-view camera, or a right-view camera), a forward lidar, a backward lidar, a GPS, and an IMU. In this case, the controller A may include the visual sensing module A, the lidar sensing module A, and the location positioning module A. When the controller B is responsible for implementing a safe parking function of the vehicle, the sensing group B may include a side-view camera (for example, a left front-view camera, a right front-view camera, a left rear-view camera, or a right rear-view camera), a GPS, and an IMU. In this case, the controller B may include the visual sensing module B and the location positioning module B.

For another example, when the controller A is responsible for an autonomous driving service of the vehicle, the sensor group A may include a front-view long-range camera, a front-view short-range camera, a surround-view camera (for example, a front-view camera, a rear-view camera, a left-view camera, or a right-view camera), a GPS, and an IMU. In this case, the controller A may include the visual sensing module A and the location positioning module A. When the controller B is responsible for implementing a safe parking function of the vehicle, the sensing group B may include a side-view camera (for example, a left front-view camera, a right front-view camera, a left rear-view camera, or a right rear-view camera), a forward lidar, and a backward lidar. In this case, the controller B may include the visual sensing module B and the lidar sensing module B.

Each of the controller A and the controller B may include a visual sensing module, a lidar sensing module, a millimeter-wave sensing module, and a location positioning module. In this way, regardless of a type of sensor included in the sensor group, both the controller A and the controller B may process data collected by the controller A and the controller B. Alternatively, the controller A and the controller B may set a sensing module based on a type of a sensor in a connected sensor group. For example, when the sensor group A does not include a lidar, the controller A may not include the lidar sensing module A. For another example, when the sensor group B does not include a positioning sensor, the controller B may not include the location positioning module.

A millimeter-wave radar and a positioning sensor (for example, a GPS and an IMU) that output data through a CAN bus or a CANFD bus may be connected to the controller A and the controller B. For example, a millimeter-wave radar and a positioning sensor in the sensor group A may be respectively connected to the controller A and the controller B. When the controller A is faulty and the millimeter-wave radar and the positioning sensor in the sensor group A are normal, the controller B may further use data collected by the millimeter-wave radar and the positioning sensor in the sensor group A, so that the vehicle stops on the current lane or pulls cover.

The local sensing fusion module A on the controller A receives sensing results of the visual sensing module A, the lidar sensing module A, the millimeter-wave sensing module A, and the location positioning module A, and fuses the sensing results, to obtain a model of information about an environment around the vehicle in a same spatial-temporal coordinate system of the sensor on the controller A. The local sensing fusion module B on the controller B receives sensing results of the visual sensing module B, the lidar sensing module B, the millimeter-wave sensing module B, and the location positioning module B, and fuses the sensing results, to obtain a model of information about an environment around the vehicle in a same spatial-temporal coordinate system of the sensor on the controller B.

The model of the information about the environment around the vehicle includes but is not limited to lane line information, traffic sign information (like traffic light information and speed limit sign information), and information about obstacles on a road.

The sensing result extraction module A on the controller A selects and extracts data in the local sensing fusion module A, and sends the selected and extracted data to the global sensing fusion module B. The global sensing fusion module B may further fuse a fusion result obtained by the local sensing fusion module B and the data sent by the sensing result extraction module A. In addition, the sensing result extraction module B on the controller B selects and extracts data in the local sensing fusion module B, and sends the selected and extracted data to the global sensing fusion module A. The global sensing fusion module A may further fuse a fusion result obtained by the local sensing fusion module A and the data sent by the sensing result extraction module B.

In an embodiment, the sensing result extraction module A selects and extracts the data in the local sensing fusion module A in a manner that includes but is not limited to the following:
(1) If both the controller A and controller B have strong performance and large memory space, or a bandwidth of a high-speed bus between the two controllers is sufficient, all data fused by the local sensing fusion modules on controller A and controller B may be synchronized to each other in real time. In this way, all information can be obtained on both controllers to a maximum extent.
(2) If the controller B has weak performance or limited memory space, the sensing result extraction module A may screen data fused by the local sensing fusion module A, and sort the data based on criticality of the information. A sorting manner may be a key direction, a distance, or the like. The sensing result extraction module A first removes non-key information (for example, information about an obstacle in left and right directions, and information about a long-distance object backward) in a non-key direction and long-distance information (for example, information about an obstacle at a distance of 200 meters forward) in a key direction. If the performance of the controller B is still insufficient at this time, the sensing result extraction module A may screen out the information, and retain and transfer other important information to the global sensing fusion module B. It should be understood that the foregoing screening process may be completed in a performance test phase of the controller.
(3) Focus on a service. If the controller B is mainly responsible for a safe parking function, the sensing result extraction module A preferentially sends, to the global sensing fusion module B, information that is required for parking and that is about an obstacle in a forward direction, a forward-right direction, a backward-right direction, and a backward direction. Less or no information about an obstacle in other directions may be sent. It should be understood that, for a vehicle driving on a left side, the sensing result extraction module A may also preferentially send, to the global sensing fusion module B, information that is required for parking and that is about an obstacle in a forward direction, a forward-left direction, a backward-left direction, and a backward direction.

The data sent by the sensing result extraction module A to the global sensing fusion module B and the data sent by the sensing result extraction module B to the global sensing fusion module A may be transmitted through a high-speed Ethernet bus. A range, a type, and a data volume of data on the controller A and the controller B may be the same or may be different, and may depend on information required for deploying a service on a peer controller.

The planning control module A on the controller A performs vehicle trajectory planning and computation based on a function deployment policy of the autonomous driving service on the controller, and generates a corresponding vehicle control instruction A. The planning control module A may send the generated vehicle control instruction A to the vehicle control instruction delivery module A. In addition, the planning control module B on the controller B performs vehicle trajectory planning and computation based on a function deployment policy of the autonomous driving service on the controller, and generates a corresponding vehicle control instruction B. The planning control module B may send the generated vehicle control instruction B to the vehicle control instruction delivery module B.

In an embodiment, function deployment on the controller A and the controller B may have different policies.

For example, different functions are deployed on the controller A and the controller B. For example, a high-speed cruise function is deployed on the controller A, and a side parking function is deployed on the controller B. Trajectory planning and motion control policies on the two controllers may be different.

For another example, a same function is deployed on the controller A and the controller B. For example, a high-speed cruise function is deployed on both the controller A and the controller B, and a same trajectory planning and motion control policy may be used on the two controllers.

For another example, some same functions may be deployed on the controller A and the controller B, and some different functions may be separately deployed on the controller A and the controller B. For example, a high-speed cruise function and a side parking function are deployed on the controller A, and a side parking function and the like are deployed on the controller B.

After receiving a vehicle control instruction, the vehicle control instruction delivery module A and the vehicle control instruction delivery module B may output the vehicle control instruction to a vehicle control bus in the following two manners.

Manner 1: A vehicle body executor may receive the vehicle control instruction A sent by the vehicle control instruction delivery module A and receive the vehicle control instruction B sent by the vehicle control instruction delivery module B.

In an embodiment, the vehicle control instruction A includes first identification information, the vehicle control instruction B includes second identification information, and the first identification information is different from the second identification information. The vehicle body executor may store a correspondence between identification information and a priority corresponding to a vehicle control instruction.

For example, if identification information included in a vehicle control instruction is a CAN ID, the executor may store a correspondence between the CAN ID and a priority corresponding to the vehicle control instruction in Table 1.

**Table 1**

| CAN ID | Priority corresponding to a vehicle control instruction |
|---|---|
| 1 | High |
| 2 | Low |
| ... | ... |

In this way, after receiving the vehicle control instruction A and the vehicle control instruction B, the vehicle body executor may obtain a CAN ID in the vehicle control instruction A and a CAN ID in the vehicle control instruction B through parsing. If the CAN ID in the vehicle control instruction A is 1 and the CAN ID in the vehicle control instruction B is 2, the vehicle body executor may execute, based on the correspondence shown in Table 1, the vehicle control instruction A with a higher priority instead of the vehicle control instruction B.

In an embodiment, the vehicle control instruction A includes first priority information, the vehicle control instruction B includes second priority information, and a first priority is higher than a second priority. In this way, after receiving the vehicle control instruction A and the vehicle control instruction B, the vehicle body executor may obtain the first priority of the vehicle control instruction A and the second priority of the vehicle control instruction B through parsing. The vehicle body executor may execute the vehicle control instruction A with a higher priority instead of the vehicle control instruction B.

In an embodiment, the vehicle control instruction A may include identification information of the controller A, and the vehicle control instruction B may include identification information of the controller B. The vehicle body executor may store a correspondence between identification information of a controller and a priority corresponding to a vehicle control instruction. For example, Table 2 shows a correspondence between identification information of a controller and a priority corresponding to a vehicle control instruction.

**Table 2**

| Identification information of a controller | Priority corresponding to a vehicle control instruction |
|---|---|
| | High |
| | Low |
| ... | ... |

In this way, after receiving the vehicle control instruction A and the vehicle control instruction B, the vehicle body executor may obtain identification information of the controller in the vehicle control instruction A and identification information of the controller in the vehicle control instruction B through parsing. The vehicle body executor may execute, based on the correspondence shown in Table 2, the vehicle control instruction A with a higher priority instead of the vehicle control instruction B.

It should be understood that the correspondence shown in the foregoing table is merely an example. This embodiment of this application is not limited thereto.

It should be further understood that the foregoing process in which the vehicle body executor determines the priorities of the vehicle control instruction A and the vehicle control instruction B by using the information carried in the vehicle control instruction A and the vehicle control instruction B is merely an example. This embodiment of this application is not limited thereto. Alternatively, the vehicle control instruction may carry other information to determine the priority of the vehicle control instruction. For example, if a first field in the vehicle control instruction A carries information but a first field in the vehicle control instruction B does not carry the information, the vehicle body executor may determine that the priority of the vehicle control instruction A is higher than the priority of the vehicle control instruction B. For another example, the priority of the vehicle control instruction may be alternatively determined through the vehicle control bus. For example, a priority of a vehicle control instruction on the vehicle control bus A is higher than a priority of a vehicle control instruction on a vehicle control bus B.

When both the controller A and the controller B are normal (or both are in a healthy working state), both the controller A and the controller B deliver vehicle control instructions. In this case, because the vehicle control instruction sent by the controller A has a high priority, the controller A actually controls running of the vehicle.

When the controller A is faulty, or when the controller A cannot control the vehicle by using existing sensor resources and computing capabilities, the master-slave management module A prohibits the vehicle control instruction delivery module A from delivering a vehicle control instruction to the vehicle control bus A. When the controller B is not faulty and can maintain the current autonomous driving service, the master-slave management module B allows the vehicle control instruction delivery module B to deliver the vehicle control instruction B to the vehicle control bus B. In this case, the control right on the vehicle may be quickly switched from the controller A to the controller B.

In an embodiment, the controller A (or the controller B) may further control a prompt apparatus to prompt a driver to take over the control right on the vehicle.

For example, the prompt apparatus includes one or more of a display screen, an atmosphere light, and a voice module. For example, the display screen may be controlled to display prompt information "Please take over the vehicle". For another example, a color of the atmosphere light may be controlled to turn red to prompt the driver to take over the vehicle. For another example, the voice module may be controlled to send voice information "Please take over the vehicle" to prompt the driver to take over the vehicle.

In an embodiment, the controller A is faulty at a moment Ti, and the sensing result extraction module A may send, to the global sensing fusion module B, a result obtained by performing sensing by the controller A on data collected by the sensor group A in a time period from a moment T₀ to the moment T₁. The global sensing fusion module B may further fuse, with reference to the sensing result sent by the sensing result extraction module A and a result obtained by performing sensing by the controller B on data collected by the sensor in the sensor group B, to improve safety in a process in which the controller B controls the vehicle to stop on the current lane or pull over.

When the controller B is also faulty, or when the controller B cannot control the vehicle by using existing sensor resources and computing capabilities, the master-slave management module B prohibits the vehicle control instruction delivery B from delivering the vehicle control instruction B to the vehicle control bus B. In this case, neither the vehicle control bus A nor the vehicle control bus B delivers a vehicle control instruction, and the vehicle body executor performs emergency braking to slow down the vehicle for parking.

In this embodiment of this application, both controllers may send vehicle control instructions to the vehicle body executor. When a controller is faulty, quick vehicle control instruction switching is performed by stopping the controller from delivering a vehicle control instruction. According to a vehicle control instruction switching solution provided in this embodiment of this application, master-slave negotiation between systems does not need to be performed, so that controllers of different vendors can be conveniently supported to form a master-backup system.

Manner 2: A vehicle body executor may receive only one vehicle control instruction, or a vehicle body executor receives only a vehicle control instruction sent by the vehicle control instruction delivery module A, or receives only a vehicle control instruction sent by the vehicle control instruction delivery module B.

For example, the controller A may be set as a master controller, and the controller A preferentially sends a vehicle control instruction. The controller B is set as a backup controller, and the controller B does not send a vehicle control instruction.

When both the controller A and the controller B are normal, the master-slave management module A and the master-slave management module B select the two controllers. In this case, the vehicle control instruction delivery module A is allowed to send a vehicle control instruction, and the vehicle control instruction delivery module B is prohibited from sending a vehicle control instruction.

When the controller A is faulty, or when the controller A cannot control the vehicle by using existing sensor resources and computing capabilities, the master-slave management module A prohibits the vehicle control instruction module A from delivering a vehicle control instruction to the vehicle control bus A. In addition, the master-slave management module B determines whether the controller B is normal. If the controller B is normal, the vehicle control instruction delivery module B is allowed to deliver a vehicle control instruction.

In an embodiment, the master-slave management module A may periodically send indication information to the master-slave management module B, where the indication information indicates whether the controller A is normal. Similarly, the master-slave management module B may periodically send indication information to the master-slave management module A, where the indication information indicates whether the controller B is normal. When determining that the controller A is faulty and the controller B is normal, the master-slave management module B may allow the vehicle control instruction delivery module B to deliver a vehicle control instruction.

In an embodiment, the master-slave management module A may store a timer. If information sent by the master-slave management module B is received during running of the timer, the master-slave management module A may consider that the controller B is normal. If information sent by the master-slave management module B is not received during running of the timer, the master-slave management module A may consider that the controller B is faulty. Similarly, the master-slave management module B may store a timer. If information sent by the master-slave management module A is received during running of the timer, the master-slave management module B may consider that the controller A is normal. If information sent by the master-slave management module A is not received during running of the timer, the master-slave management module B may consider that the controller A is faulty.

When both the controller A and the controller B are faulty and cannot normally deliver a vehicle control instruction, neither the vehicle control bus A nor the vehicle control bus B delivers a vehicle control instruction. In this case, the vehicle executor performs emergency braking to slow down the vehicle for parking.

The hardware monitoring module A on the controller A may monitor a fault status of a hardware system on the controller A in real time. If there is a fault status, fault information is reported to the fault management module A. Similarly, the hardware monitoring module B on the controller B may monitor a fault status of a hardware system on the controller B in real time. If there is a fault status, fault information is reported to the fault management module B.

The software monitoring module A on the controller A monitors a health status of software on the controller in real time. If a fault occurs, fault information is reported to the fault management module A. Similarly, the software monitoring module B on the controller B monitors a health status of software on the controller in real time. If a fault occurs, fault information is reported to the fault management module B.

The fault management module A summarizes and classifies software faults and hardware faults on the controller A, to determine whether a fault that affects the autonomous driving service occurs, and provide an impact severity of the fault. Similarly, the fault management module B summarizes and classifies software faults and hardware faults on the controller B to determine whether a fault that affects the autonomous driving service occurs, and provide an impact severity of the fault.

In an embodiment, the fault management module A and the fault management module B separately run at an automotive safety integrity level D (automotive safety integrity level D, ASIL-D) on respective controllers thereof.

The master-slave management module A obtains fault information of the controller A from the fault management module A, and the master-slave management module B obtains fault information of the controller B from the fault management module B. The master-slave management module A and the master-slave management module B may respectively run at a function security level of ASIL-D on respective controllers thereof. The master-slave management module A and the master-slave management module B communicate with each other through two heterogeneous buses between the two controllers, for example, a CAN bus and an Ethernet bus, to notify each other of health statuses thereof and whether the master-slave management module A and the master-slave management module B each are sending a vehicle control instruction.

In this embodiment of this application, the two controllers may be separately connected to different sensor groups, and the two controllers separately perform sensing computation on data collected by sensors in these sensor groups. Each controller sends computed structured data to the peer controller, and each controller can obtain sensing results of all sensors, so that sensing computation capabilities of the two controllers can be effectively used, to help improve utilization of computing resources.

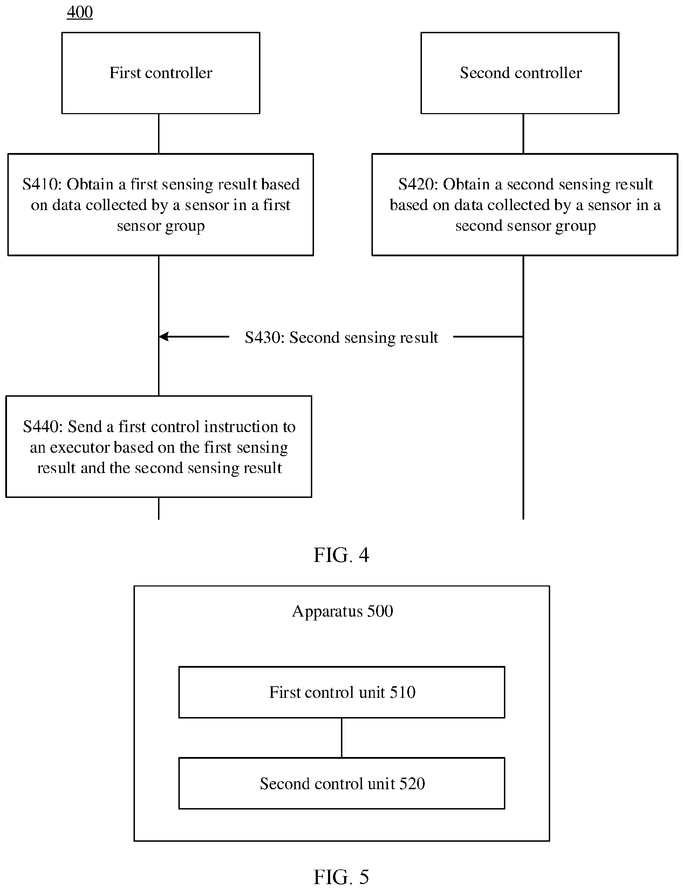

FIG. 4 is a schematic flowchart of a control method 400 according to an embodiment of this application. The method 400 may be applied to a control system including a first controller and a second controller. For example, the control system may be located in a means of transportation; or the control system may be located in the computing platform shown in FIG. 1; or the control system may be located in the ADAS system. The method 400 includes the following steps.

S410: The first controller obtains a first sensing result based on data collected by a sensor in a first sensor group.

For example, the first controller may be the foregoing controller A, and the first sensor group may be the foregoing sensor group A.

Optionally, the first controller may be a master controller.

S420: The second controller obtains a second sensing result based on data collected by a sensor in a second sensor group.

For example, the second controller may be the foregoing controller B, and the second sensor group may be the foregoing sensor group B.

Optionally, the second controller is a backup controller.

Optionally, the first sensor group and the second sensor group may include a same sensor.

Optionally, at least some sensors in the first sensor group are different from sensors in the second sensor group.

It should be understood that, that at least some sensors in the first sensor group are different from sensors in the second sensor group may be understood as that sensors in the first sensor group are different from sensors in the second sensor group, that is, the first sensor group and the second sensor group do not have a same sensor.

For example, the control system is located in a vehicle. The first controller may be responsible for an autonomous driving service, and the second controller may be responsible for a safe parking function. In this case, the first sensor group may include a front-view long-range camera, a front-view short-range camera, a surround-view camera (for example, a front-view camera, a rear-view camera, a left-view camera, and a right-view camera), a forward lidar, a backward lidar, a GPS, and an IMU; and the second sensor group may include a side-view camera (for example, a left front-view camera, a right front-view camera, a left rear-view camera, and a right rear-view camera). In this case, sensors in the first sensor group all may be different from sensors in the second sensor group.

Alternatively, that at least some sensors in the first sensor group are different from sensors in the second sensor group may be understood as that some sensors in the first sensor group are the same as some sensors in the second sensor group, and the other sensors in the first sensor group are different the other sensors in the second sensor group, that is, the first sensor group does not include some sensors in the second sensor group, and the second sensor group does not include some sensors in the first sensor group.

For example, the control system is located in a vehicle. The first controller may be responsible for an autonomous driving service, and the second controller may be responsible for a safe parking function. In this case, the first sensor group may include a front-view long-range camera, a front-view short-range camera, a surround-view camera (for example, a front-view camera, a rear-view camera, a left-view camera, and a right-view camera), a GPS, and an IMU; and the second sensor group may include a side-view camera (for example, a left front-view camera, a right front-view camera, a left rear-view camera, and a right rear-view camera), a forward lidar, a backward lidar, a GPS, and an IMU. In this case, each of the first sensor group and the second sensor group has the GPS and the IMU, the first sensor group does not include the side-view camera, the forward lidar, and the backward lidar in the second sensor group, and the second sensor does not include the front-view long-range camera, the front-view short-range camera, and the surround-view camera in the first sensor group.

S430: The second controller sends the second sensing result to the first controller.

Correspondingly, the first controller receives the second sensing result sent by the second controller.

Optionally, that the second controller sends the second sensing result to the first controller includes: The second controller sends the second sensing result to the first controller through a CAN bus, a CANFD bus, or an Ethernet bus.

Optionally, the second sensing result includes a part of a result obtained by performing sensing by the second controller on the data collected by the sensor in the second sensor group. For example, when each of the first sensor group and the second sensor group has the GPS and the IMU, the second controller may not send a sensing result for a location of the means of transportation to the first controller.

S440: The first controller sends a first control instruction to an executor based on the first sensing result and the second sensing result.

For example, as shown in FIG. 3, the global sensing fusion module A may further fuse a fusion result obtained by the local sensing fusion module A and data sent by the sensing result extraction module B; the planning control module A may generate a vehicle control instruction based on a fused result; and the vehicle control instruction delivery module A may send the vehicle control instruction to the vehicle body executor.

Optionally, the method 400 further includes: The first controller sends the first sensing result to the second controller.

Correspondingly, the second controller receives the first sensing result sent by the first controller. The second controller generates a second control instruction based on the first sensing result and the second sensing result.

Optionally, the first sensing result includes a part of a result obtained by performing sensing by the first controller on the data collected by the sensor in the first sensor group.

For example, when each of the first sensor group and the second sensor group has the GPS and the IMU, the first controller may not send a sensing result for a location of the means of transportation to the second controller.

For another example, the first controller may sense information about an obstacle in left and right directions of the means of transportation, information about an object at a distance of 100 meters backward, and information about an obstacle at a distance of 200 meters forward by using data collected by the surround-view camera. The second sensing result sent by the first controller to the second controller may carry only the information about an obstacle at a distance of 200 meters forward, but does not carry the information about an obstacle in left and right directions and the information about an object at a distance of 100 meters backward.

Optionally, the method 400 further includes: The second controller sends the second control instruction to the executor.

Optionally, that the first controller and the second controller are located in a vehicle is used as an example. The second controller may send the second control instruction to the vehicle body executor through a CAN bus or a CANFD bus.

Optionally, the first control instruction includes first identification information, the second control instruction includes second identification information, and the first identification information is different from the second identification information. After receiving the first control instruction and the second control instruction, the executor may perform a corresponding control operation based on the first identification information and the second identification information.

For example, the first identification information may be a first CAN ID, and the second identification information may be a second CAN ID. The executor may store a correspondence between identification information (for example, a CAN ID) and a priority of a control instruction. For example, a priority of a control instruction corresponding to the first CAN ID is higher than a priority of a control instruction corresponding to the second CAN ID. In this way, when receiving the first control instruction and the second control instruction, the executor may execute the first control instruction with a higher priority instead of the second control instruction.

Optionally, the first control instruction includes first priority information, and the second control instruction includes second priority information. In this way, the executor does not need to store a correspondence between identification information and a priority of a control instruction. The executor may directly execute a control instruction with a higher priority. For example, a first priority is higher than a second priority. In this case, when receiving the first control instruction and the second control instruction, the executor may execute the first control instruction with a higher priority instead of the second control instruction.

Optionally, the first control instruction may include identification information of the first controller, and the second control instruction may include identification information of the second controller. The executor may store a correspondence between a controller and a priority of a vehicle control instruction sent by the controller. For example, a priority of the first controller is higher than a priority of the second controller. In this way, when receiving the first control instruction and the second control instruction, the executor may execute the first control instruction with a higher priority instead of the second control instruction with a lower priority.

Optionally, the method 400 further includes: When the first controller is faulty, the first controller stops sending the first control instruction to the executor.

For example, as shown in FIG. 3, if the vehicle body executor supports controlling the vehicle by using two vehicle control instructions, and the fault management module A determines, by using a monitoring result of the hardware monitoring module A and/or the software monitoring module, that the controller A is faulty, the fault management module A may notify the master-slave management module A that the controller A is faulty. Therefore, the master-slave management module A may control the vehicle control instruction delivery module A to stop delivering a vehicle control instruction to the vehicle control bus A.

Optionally, the method 400 further includes: When the first controller is faulty, the first controller stops sending the first control instruction; and the second controller sends the second control instruction to the executor when it is determined that the first controller is faulty and the second controller is not faulty.

For example, as shown in FIG. 3, if the vehicle body executor supports controlling the vehicle by using only one vehicle control instruction, and the fault management module A determines, by using a monitoring result of the hardware monitoring module A and/or the software monitoring module, that the controller A is faulty, the fault management module A may notify the master-slave management module A that the controller A is faulty. Therefore, the master-slave management module A may control the vehicle control instruction delivery module A to stop delivering a vehicle control instruction to the vehicle control bus A. In addition, the master-slave management module A may further notify the master-slave management module B that the controller A is faulty. After receiving the notification, the master-slave management module B may switch a state of the vehicle control instruction delivery module B from a state of forbidding delivering a vehicle control instruction to the vehicle control bus B to a state of allowing delivering a vehicle control instruction to the vehicle control bus B.

Optionally, the method is applied to a means of transportation, and before the sending a first control instruction to an executor, the method further includes: determining that the means of transportation is in an autonomous driving state. The method 400 further includes: prompting a user to take over the means of transportation.

Optionally, the prompting a user to take over the means of transportation includes: controlling a prompt apparatus to prompt the user to take over the means of transportation. For example, the user may be prompted to take over the means of transportation by one of more of controlling a display screen to display prompt information, controlling a color change of an atmosphere light, or controlling a voice module to send a voice prompt tone.

Optionally, the first controller is faulty at a first moment, and the method further includes: The first controller sends a third sensing result to the second controller, where the third sensing result includes a result obtained by performing sensing by the first controller in a first time period on the data collected by the sensor in the first sensor group, and the first time period is before the first moment; and the second controller controls based on the third sensing result and the second sensing result, the vehicle to park.

Optionally, a sensor that outputs data through a CAN bus or a CANFD bus may be connected to both the first controller and the second controller.

Optionally, the first sensor group and the second sensor group include a positioning sensor and/or a millimeter-wave radar.

Optionally, the second sensor group includes a side-view camera.

For example, the means of transportation is a vehicle. The second controller may be responsible for safe parking of the vehicle. In this way, the second sensor group includes the side-view camera, so that when the first controller is faulty, the second controller implements safe parking of the vehicle by using data collected by the side-view camera.

Embodiments of this application further provide an apparatus configured to implement any one of the foregoing methods. For example, embodiments of this application provide an apparatus including units (or means) configured to implement the steps performed by the means of transportation in any one of the foregoing methods.

FIG. 5 is a schematic flowchart of a control apparatus 500 according to an embodiment of this application. As shown in FIG. 5, the apparatus 500 includes: a first control unit 510, configured to obtain a first sensing result based on data collected by a sensor in a first sensor group; and a second control unit 520, configured to obtain a second sensing result based on data collected by a sensor in a second sensor group. The second control unit 510 is further configured to send the second sensing result to the first control unit. The first control unit 520 is configured to send a first control instruction to an executor based on the first sensing result and the second sensing result.

Optionally, the first control unit 510 is further configured to send the first sensing result to the second control unit. The second control unit 520 is further configured to generate a second control instruction based on the first sensing result and the second sensing result.

Optionally, the second control unit 520 is further configured to send the second control instruction to the executor.

Optionally, the first control unit 510 is further configured to: when the first control unit is faulty, stop sending the first control instruction to the executor.

Optionally, the first control unit 510 is further configured to: when the first control unit is faulty, stop sending the first control instruction. The second control unit 520 is configured to send the second control instruction to the executor when it is determined that the first control unit is faulty and the second control unit is not faulty.

Optionally, the first control unit 510 is further configured to: before sending the first control instruction to the executor, determine that a means of transportation is in an autonomous driving state. The first control unit 510 is further configured to: when the first control unit is faulty, control a prompt apparatus to prompt a user to take over the means of transportation.

Optionally, the first control unit 510 is faulty at a first moment. The first control unit 510 is further configured to send a third sensing result to the second control unit 520, where the third sensing result includes a result obtained by performing sensing by the first control unit in a first time period on the data collected by the sensor in the first sensor group, and the first time period is before the first moment. The second control unit 520 is further configured to control, based on the third sensing result and the second sensing result, the vehicle to park.

Optionally, at least some sensors in the first sensor group are different from sensors in the second sensor group.

Optionally, the first sensor group and the second sensor group include a positioning sensor and a millimeter-wave radar.

Optionally, the second sensor group includes a side-view camera.

It should be understood that division into units in the apparatus is merely logical function division. During actual implementation, all or some of the units may be integrated into one physical entity or may be physically separated. In addition, a unit in the apparatus may be implemented in a form of a processor invoking software. For example, the apparatus includes a processor, the processor is connected to a memory, the memory stores instructions, and the processor invokes the instructions stored in the memory, to implement any one of the foregoing methods or functions of units in the apparatus. The processor is, for example, a general-purpose processor, like a CPU or a microprocessor, and the memory is a memory inside the apparatus or a memory outside the apparatus. Alternatively, a unit in the apparatus may be implemented in a form of a hardware circuit, and functions of some or all units may be implemented by designing the hardware circuit. The hardware circuit may be understood as one or more processors. For example, in an implementation, the hardware circuit is an ASIC, and functions of some or all units are implemented by designing a logical relationship between elements in the circuit. For another example, in another implementation, the hardware circuit may be implemented by using a PLD. Using an FPGA as an example, the FPGA may include a large quantity of logic gate circuits, and a connection relationship between the logic gate circuits is configured by using a configuration file, to implement functions of some or all of the foregoing units. All the units of the foregoing apparatus may be implemented in a form of software invoked by a processor, or may be implemented in a form of a hardware circuit, or some of the units are implemented in a form of software invoked by a processor, and the remaining units are implemented in a form of a hardware circuit.

In embodiments of this application, the processor is a circuit having a signal processing capability. In an implementation, the processor may be a circuit having an instruction reading and running capability, for example, a CPU, a microprocessor, a GPU, or a DSP. In another implementation, the processor may implement a specific function by using a logical relationship of a hardware circuit, and the logical relationship of the hardware circuit is fixed or reconfigurable, for example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads an instruction to implement functions of some or all of the foregoing units. In addition, the processor may be a hardware circuit designed for artificial intelligence, and may be understood as an ASIC, for example, an NPU, a TPU, or a DPU.

It can be learned that the units in the foregoing apparatus may be configured to implement one or more processors (or processing circuits) of the foregoing method, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be implemented independently. In an implementation, these units are integrated together and implemented in a form of a system-on-a-chip (system-on-a-chip, SOC). The SOC may include at least one processor, configured to implement any one of the foregoing methods or implement functions of units of the apparatus. Types of the at least one processor may be different, for example, include a CPU and an FPGA, a CPU and an artificial intelligence processor, a CPU and a GPU, and the like.

An embodiment of this application further provides an apparatus. The apparatus includes a processing unit and a storage unit. The storage unit is configured to store instructions, and the processing unit executes the instructions stored in the storage unit, so that the apparatus performs the methods or steps performed in the foregoing embodiments.

Optionally, if the apparatus is located in a vehicle, the processing unit may be the processors 151 to 15n shown in FIG. 1.

An embodiment of this application further provides a means of transportation. The means of transportation may include the foregoing control apparatus 500.

Optionally, the means of transportation may be a vehicle.

An embodiment of this application further provides a computer program product. The computer program product includes computer program code, and when the computer program code is run on a computer, the computer is enabled to perform the method.

An embodiment of this application further provides a computer-readable medium. The computer-readable medium stores program code, and when the computer program code is run on a computer, the computer is enabled to perform the method.

In an implementation process, steps in the foregoing methods can be implemented by using a hardware integrated logical circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in embodiments of this application, the memory may include a read-only memory and a random access memory, and provide instructions and data to the processor.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
obtaining, by a first controller, a first sensing result based on data collected by a sensor in a first sensor group;
obtaining, by a second controller, a second sensing result based on data collected by a sensor in a second sensor group;
receiving, by the first controller, the second sensing result sent by the second controller; and
sending, by the first controller, a first control instruction to an executor based on the first sensing result and the second sensing result.

2. The method according to claim 1, wherein the method further comprises:
receiving, by the second controller, the first sensing result sent by the first controller; and
generating, by the second controller, a second control instruction based on the first sensing result and the second sensing result.

3. The method according to claim 2, wherein the method further comprises:
sending, by the second controller, the second control instruction to the executor.

4. The method according to claim 3, wherein the method further comprises:
when the first controller is faulty, stopping, by the first controller, sending the first control instruction to the executor.

5. The method according to claim 2, wherein the method further comprises:
when the first controller is faulty, stopping, by the first controller, sending the first control instruction; and
sending, by the second controller, the second control instruction to the executor when it is determined that the first controller is faulty and the second controller is not faulty.

6. The method according to claim 4 or 5, wherein the method is applied to a means of transportation, and before the sending a first control instruction to an executor, the method further comprises:
determining that the means of transportation is in an autonomous driving state; and
the method further comprises:
prompting a user to take over the means of transportation.

7. The method according to any one of claims 4 to 6, wherein the first controller is faulty at a first moment, and the method further comprises:
sending, by the first controller, a third sensing result to the second controller, wherein the third sensing result comprises a result obtained by performing sensing by the first controller in a first time period on the data collected by the sensor in the first sensor group, and the first time period is before the first moment; and
controlling, by the second controller based on the third sensing result and the second sensing result, the means of transportation to stop traveling.

8. The method according to any one of claims 1 to 7, wherein at least some sensors in the first sensor group are different from sensors in the second sensor group.

9. The method according to any one of claims 1 to 8, wherein the first sensor group and the second sensor group comprise a positioning sensor and a millimeter-wave radar.

10. The method according to any one of claims 1 to 9, wherein the second sensor group comprises a side-view camera.

11. A control apparatus, comprising:
a first control unit, configured to obtain a first sensing result based on data collected by a sensor in a first sensor group; and
a second control unit, configured to obtain a second sensing result based on data collected by a sensor in a second sensor group, wherein
the second control unit is further configured to send the second sensing result to the first control unit; and
the first control unit is configured to send a first control instruction to an executor based on the first sensing result and the second sensing result.

12. The apparatus according to claim 11, wherein
the first control unit is further configured to send the first sensing result to the second control unit; and
the second control unit is further configured to generate a second control instruction based on the first sensing result and the second sensing result.

13. The apparatus according to claim 12, wherein
the second control unit is further configured to send the second control instruction to the executor.

14. The apparatus according to claim 13, wherein
the first control unit is further configured to: when the first control unit is faulty, stop sending the first control instruction to the executor.

15. The apparatus according to claim 12, wherein
the first control unit is further configured to: when the first control unit is faulty, stop sending the first control instruction; and
the second control unit is configured to send the second control instruction to the executor when it is determined that the first control unit is faulty and the second control unit is not faulty.

16. The apparatus according to claim 14 or 15, wherein
the first control unit is further configured to: before sending the first control instruction to the executor, determine that a means of transportation is in an autonomous driving state; and
the first control unit is further configured to: when the first control unit is faulty, control a prompt apparatus to prompt a user to take over the means of transportation.

17. The apparatus according to any one of claims 14 to 16, wherein the first control unit is faulty at a first moment;
the first control unit is further configured to send a third sensing result to the second control unit, wherein the third sensing result comprises a result obtained by performing sensing by the first control unit in a first time period on the data collected by the sensor in the first sensor group, and the first time period is before the first moment; and
the second control unit is further configured to control, based on the third sensing result and the second sensing result, the means of transportation to stop traveling.

18. The apparatus according to any one of claims 11 to 17, wherein at least some sensors in the first sensor group are different from sensors in the second sensor group.

19. The apparatus according to any one of claims 11 to 18, wherein the first sensor group and the second sensor group comprise a positioning sensor and a millimeter-wave radar.

20. The apparatus according to any one of claims 11 to 19, wherein the second sensor group comprises a side-view camera.

21. A control apparatus, wherein the control apparatus comprises a processor and a memory, the memory is configured to store program instructions, and the processor is configured to invoke the program instructions to perform the method according to any one of claims 1 to 10.

22. A means of transportation, wherein the means of transportation comprises the control apparatus according to any one of claims 11 to 21.

23. The means of transportation according to claim 22, wherein the means of transportation is a vehicle.

24. A computer-readable storage medium, wherein the computer-readable medium stores program code, and when the program code is run on a computer, the computer is enabled to perform the method according to any one of claims 1 to 10.

25. A chip, wherein the chip comprises a processor and a data interface, and the processor reads, through the data interface, instructions stored in a memory, to perform the method according to any one of claims 1 to 10.

26. A computer program product, wherein the computer program product comprises computer program code, and when the computer program code is run on a computer, the computer is enabled to perform the method according to any one of claims 1 to 10.
